# EUROPEAN PATENT APPLICATION

(11) **EP 0 810 061 A1**
(43) Date of publication of application: **03.12.1997**
(21) Application number: 97107200.4
(22) Date of filing: 30.04.1997
(51) Int. Cl.: B23Q 1/54

(54) **A tilting jig**

(30) Priority: 29.05.1996 JP 134745/96
(71) Applicant: TOYOTA JIDOSHA KABUSHIKI KAISHA, Aichi-ken (JP)
(72) Inventor: Tetsuo, Seki, Toyota-shi, Aichi-ken, 471 (JP); Osamu, Kondo,, Aichi-ken, 471 (JP); Tosio, Kira, Mie-ken, 498 (JP)
(74) Representative: Pellmann, Hans-Bernd, Dipl.-Ing.

(57) **Abstract**

It is an object of the present invention to reduce the overall cost of the machining process by simplifying the construction of a tilting jig (10) and varying the angle at which a workpiece (W) is held efficiently, and thereby to avoid the troubles in processing a plurality of surfaces of the workpiece. In order to achieve the above-described object, according to the present invention, there is provided a jig body (11) capable of rotating about a central tilt axis (C), and a clamp device (15) for clamping the workpiece is provided inside the jig body. The workpiece is held by the clamp device on the central tilt axis, thereby minimizing the turning radius of the ends of the workpiece and the rotating moment of the workpiece during the tilting movement thereof. Thus, the cubic volume and strength required for the tilting jig and the driving power required for the power source can also be reduced, thereby allowing a compact and lightweighted tilting jig to be obtained.

## Description

### BACKGROUND OF THE INVENTION

### Field of the Invention

The present invention relates to a tilting jig capable of varying the angle at which a workpiece is held.

### Description of Prior Art

A conventional tilting jig is provided with a workpiece holding portion whose tilt angle can be varied. In general, the tilting jig is used with an NC machine tool. Once a workpiece is secured to the workpiece holding portion, it is possible to process a plurality of surfaces of the workpiece within a single machining operation by varying the tilt angle of the workpiece holding portion. Thus, the tilting jig is useful for an intensive machining process and applicable to various forms of machining.

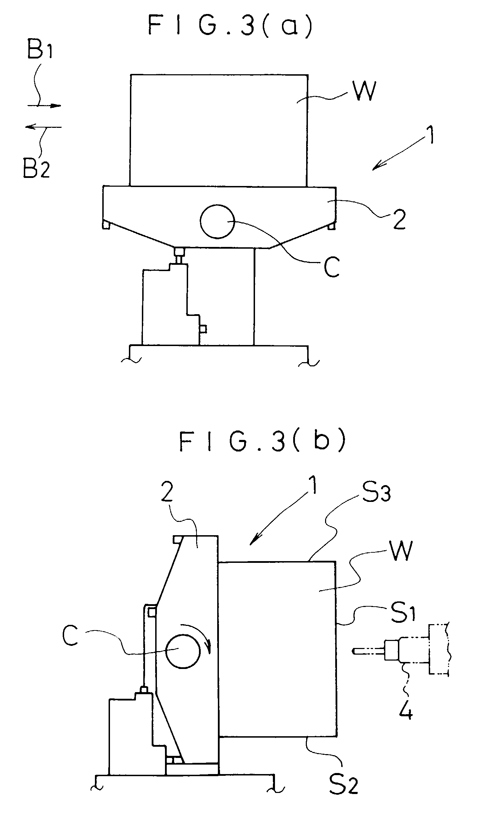

A conventional tilting jig is schematically shown in Fig. 3. A tilting jig 1 has a rotary base 2 serving as a workpiece holding portion, and the rotary base 2 is capable of rotating about its central tilt axis C between a horizontal position as shown in Fig. 3(a) and a vertical position as shown in Fig. 3(b). A workpiece W is fed to and removed from the tilting jig 1 in the directions of arrows B1 and B2 respectively when the rotary base 2 is in the horizontal position as shown in Fig. 3(a). Upon feeding of the workpiece W, the workpiece W is secured to the rotary base 2 by a clamp mechanism (not shown). Then, the rotary base 2 is tilted until it reaches the vertical position (b). In this state, a spindle head 4 is brought closer to the workpiece W in order to perform the machining process thereof. Furthermore, the rotary base 2 is designed to be capable of rotating further downward by 90° . In the case where the rotary base 2 allows the machining process to be performed with the spindle head 4 regardless of the tilt angle thereof, at most three surfaces (top surface S₁ and lateral surfaces S₂ and S₃) of the workpiece can be processed.

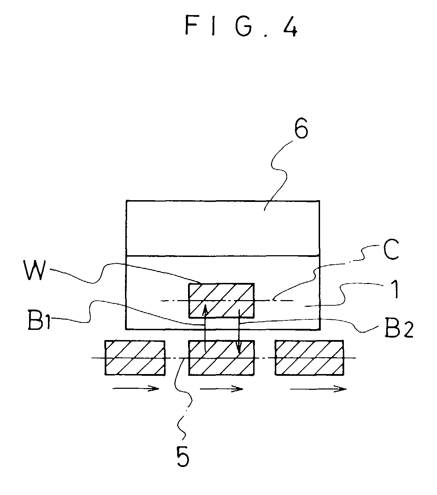

Fig. 4 illustrates the relationship between the tilting jig 1 as shown in Fig. 3 and a transferring route 5 of the workpiece W. The workpiece transferring route 5 is provided adjacent to the tilting jig 1 such that it is arranged in parallel with the central tilt axis C. A workpiece setting device, which is separately provided, allows the workpiece W to be fed to and removed from the tilting jig 1. Reference numeral 6 denotes an NC machine tool such as a machining center.

However, the conventional tilting jig of the above-described construction has the drawbacks as described in the following. Since the rotary base 2 is supported on the central tilt axis C and the workpiece W is mounted on the rotary base 2, the workpiece W is held apart from the central tilt axis C by a predetermined distance. Thus, when the angle at which the workpiece W is held is varied by tilting the rotary base 2, the turning radius of the ends of the workpiece is relatively large. As a result, the tilting jig is inevitably required to have a capacity sufficient to permit such a large turning radius. By the same token, since the rotating moment of the workpiece W is also relatively large, the tilting jig is required to have a corresponding strength and a corresponding power source, which entails an increase in the overall dimension of the tilting jig 1. Furthermore, the overall construction is complicated by the fact that a separate workpiece setting device is required between the workpiece transferring route 5 and the tilting jig 1 in order to feed the workpiece W to the tilting jig 1 or remove the same therefrom.

### SUMMARY OF THE INVENTION

The present invention has been made in order to eliminate the above-described drawbacks. It is thus an object of the present invention to lower the manufacturing cost of the tilting jig by simplifying the construction thereof, and avoid the troubles in processing a plurality of surfaces of the workpiece by efficiently varying the angle at which the workpiece is held.

In order to achieve the above-described object, according to a first aspect of the present invention, there is provided a tilting jig comprising a workpiece holding portion for holding a workpiece thereon, the workpiece holding portion being arranged on a central tilt axis. When the workpiece is tilted, the turning radius of the ends thereof is minimized and the rotating moment of the workpiece is decreased.

According to a second aspect of the present invention, the workpiece holding portion preferably comprises a jig body capable of rotating about the central tilt axis, the jig body accommodating a clamp device for clamping the workpiece therein. The workpiece is held inside the jig body by the clamp device and the workpiece is fixed on the central tilt axis.

Furthermore, according to a third aspect of the present invention, preferably, at least six faces of the jig body are provided with openings, and the jig body is capable of rotating about an axis perpendicular to the central tilt axis. Since the jig body is capable of rotating about the central tilt axis as well as the axis perpendicular thereto, it is possible to arrange all of the six faces provided with openings (front, back, top, bottom, left-side, and right-side faces) face to face with the spindle head by combining the rotational movements of the jig body in the both directions appropriately.

Furthermore, according to a fourth aspect of the present invention, preferably, a workpiece transferring route is arranged on the central tilt axis, and a workpiece feeding entrance and a workpiece removing exit are also provided on the central tilt axis. Namely, in order to eliminate any excessive movement of the workpiece, the tilting jig is arranged on the workpiece transferring route and the machining process is performed on the workpiece transferring route.

### BRIEF DESCRIPTION OF THE DRAWINGS

Fig. 1 is a front view of a tilting jig according to an embodiment of the present invention.

Fig. 2 is a partially cross-sectional side view of the tilting jig as shown in Fig. 1.

Fig. 3 is a schematic view of a conventional tilting jig, in which a horizontal position of a rotary base is indicated by (a), while a vertical position of the rotary base is indicated by (b).

Fig. 4 is a plan view showing the relationship between the tilting jig as shown in Fig. 3 and a workpiece transferring route.

### DESCRIPTION OF THE PREFERRED EMBODIMENTS

An embodiment of the present invention will be described in the following with reference to the accompanying drawings. Any parts similar or equivalent to those of the conventional example as described above will be denoted by the same reference numerals and will not be described in detail.

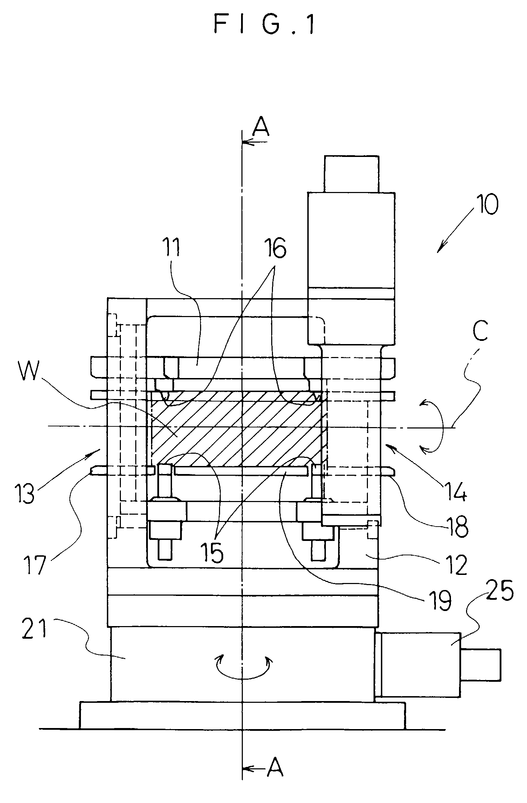

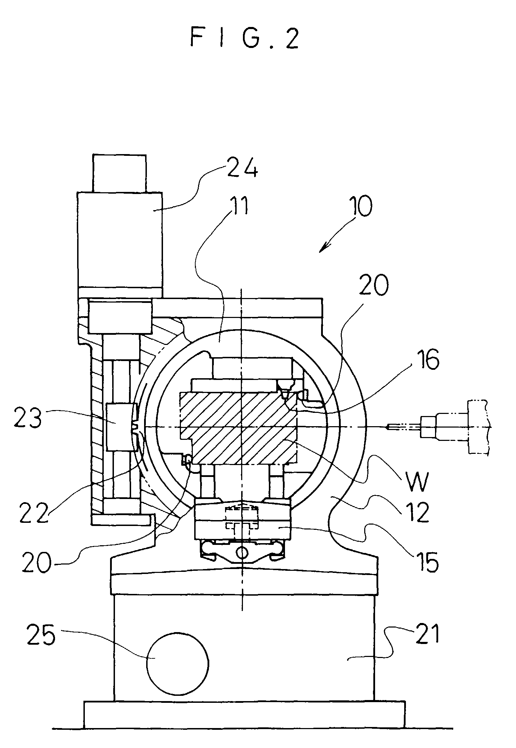

Figs. 1 and 2 show a tilting jig according to the embodiment of the present invention respectively. The tilting jig 10 has a substantially barrel-shaped jig body 11, which serves as a workpiece holding portion. The outer circumference of the jig body 11 is rotatably supported by a jig frame 12, whereby the jig body 11 itself is formed as a hollow rotational shaft. Furthermore, the jig body 11 is provided with a worm wheel 22 partially along the outer circumference thereof (Fig. 2), and a worm 23 to be engaged with the worm wheel 22 is driven by a motor 24 for tilting. Thus, the jig body 11 is able to rotate about a central rotational axis thereof. The central axis of the jig body 11 corresponds to the central tilt axis C.

Furthermore, as shown in Fig. 1, both ends of the jig body 11 serve as an entrance 13 for feeding the workpiece to the jig body 11 and an exit 14 for removing the workpiece from the jig body 11 respectively. In addition, at least four lateral faces (front, back, top, and bottom faces) of the jig body 11 are provided with openings. As a result, there are a total of at least six openings provided, taking the entrance 13 and the exit 14 into account.

Clamp devices 15 for holding the workpiece are installed inside the jig body 11. Furthermore, datum pins 16 are arranged face to face with the corresponding clamp devices 15 inside the jig body. Fixing and positioning of the workpiece W can be made simultaneously by pressing the workpiece W against the datum pins 16 and inserting the datum pins 16 into datum holes (not shown) of the workpiece W. In this state, the workpiece W can be supported on the central tilt axis C.

Guide rails 17 and 18 for transferring the workpiece W are provided at the entrance 13 and exit 14 of the jig body 11 respectively, and a transferring route (not shown) of the workpiece W is continuously connected to the guide rails 17 and 18. The jig body 11 is provided with a tilting rail 19 via which the guide rails 17 and 18 are connected to each other. Furthermore, one of the above-described clamp devices 15 is located between the guide rail 17 and one end of the tilting rail 19, and the other clamp device 15 is located between the guide rail 18 and the other end of the tilting rail 19.

As described above, the characteristic aspect of the tilting jig according to the present embodiment lies in that the jig body having clamp devices therein is capable of rotating about the central tilt axis by being supported by the jig frame, and in that a driving means for rotatably driving the jig body with respect to the jig frame is provided.

The jig frame 12 for rotatably supporting the jig body 11 is mounted on a rotary table 21. The rotary table 21 is driven by a table motor 25 to rotate about a vertical axis (A-A line in Fig. 1) perpendicular to the central axis of the jig body 11 which is a central tilt axis C. All of the at least six faces provided with openings can be arranged face to face with the spindle head 4 as shown in Fig. 2 by combining the rotational movements of the jig body 11 and the rotary base 21 appropriately. Accordingly, it is possible to process all the surfaces of the workpiece W by combining the tilting jig 10 with the spindle head 4, which is capable of moving only in one direction as shown on the right side of Fig. 2 to approach and/or separate from the tilting jig 10.

Then, the operating procedure of the tilting jig 10 according to the embodiment of the present invention will be described. The workpiece W mounted on a pallet or the like is fed to the inside of the jig body 11 directly from the entrance 13 through the workpiece transferring route and the guide rail 17. Then, the workpiece W is guided inside the jig body 11 by a guide 20 comprising a roller and the like. When the workpiece W is fed onto the tilting rail 19, the clamp device 15 is raised, causing the datum pins 16 to be inserted into datum holes (not shown) formed in the workpiece W. In this manner, the workpiece W is securely fixed and positioned.

The motor 24 for tilting and the table motor 25 are operated to bring the respective surfaces of the workpiece W to be processed face to face with the spindle head 4 so that the machining process can be performed. Upon completing the machining process of all the surfaces to be processed, the tilt angle of the jig body 11 is reset as shown in Figs. 1 and 2, (in which the tilting rail 19 and the guide rails 17 and 18 are continuously connected to each other and the workpiece transferring route is aligned with the central tilt axis to allow the workpiece W to be fed to and removed from the jig body 11) and the clamp device 15 is caused to move downward. The workpiece W is returned onto the tilting rail 19 and is sent out directly onto the workpiece transferring route from the exit 14 through the guide rail 18.

The function and effect obtained by the embodiment of the present invention constructed as described above will be explained in the following. The jig body 11 of the tilting jig 10 is formed substantially in the shape of a barrel, and the outer circumference of the jig body 11 is rotatably supported by the jig frame 12, whereby the jig body 11 itself is formed as a hollow rotating shaft. The workpiece W is held inside the jig body 11 so as to form a workpiece holding portion, which allows the workpiece W to be arranged on the central axis of the jig body 11, which coincides with the central tilt axis C of the tilting jig 10. In this manner, by arranging the workpiece W on the central tilt axis C, it becomes possible to minimize the turning radius of the ends of the workpiece W during the tilting movement thereof, the cubic volume of the tilting jig 10, and the rotating moment of the workpiece W. Consequently, the strength required for the tilting jig 10 and the driving power required for the power source can also be minimized. As a result, the number of parts of the tilting jig according to the embodiment of the present invention can be reduced by 30%, while the manufacturing cost and cubic volume thereof can be reduced by 50%, in comparison with the conventional tilting jig.

At least four lateral faces (front, back, top and bottom faces) of the jig body 11 are provided with openings so that there are a total of at least six faces provided with openings, taking the entrance 13 and the exit 14 into account. Furthermore, the jig frame 12 for rotatably supporting the jig body 11 is supported by the rotary table 21, which rotates about a vertical line perpendicular to the central tilt axis C. Accordingly, by combining the rotational movements of the jig body 11 and the rotary table 21 appropriately, it is possible to arrange all of the at least six faces of the jig body 11 provided with openings face to face with the spindle head 4. Thus, it is possible to process all the surfaces of the workpiece W.

Furthermore, both ends of the jig body 11 are provided with openings which serve as the entrance 13 and the exit 14 respectively, and the guide rail 17 provided at the entrance 13 and the guide rail 18 provided at the exit 14 are connected respectively to the workpiece transferring route. More specifically, the tilting jig 10 is disposed on the workpiece transferring route, so that the workpiece W can be fed to the inside of the jig body 11 directly through the entrance 13 and sent out onto the workpiece transferring route directly through the exit 14. In other words, since the excessive movement of the workpiece W between the workpiece transferring route and the tilting jig 10 as conventionally observed is completely eliminated, there is no need to employ the workpiece setting device. Furthermore, the time required to process one workpiece has been reduced almost by half and any separate workpiece setting device is unnecessary, which allows the overall construction of the jig to be simplified.

The advantages obtained by the present invention constructed as described above will be explained in the following. According to the present invention, by arranging the workpiece on the central tilt axis, the turning radius of the ends of the workpiece and the rotating moment of the workpiece during the tilting movement thereof are both reduced. Accordingly, it is possible to reduce the cubic volume and strength required for the tilting jig and the driving power required for the power source, thereby providing a compact and lightweighted tilting jig.

Furthermore, according to the present invention, there is provided a jig body capable of rotating about the central tilt axis, and the jig body accommodates a clamp device for clamping the workpiece therein. The workpiece is held inside the jig body by the clamp device and the workpiece is fixed on the central tilt axis so as to form a workpiece holding portion capable of rotating the jig body. In this manner, the turning radius of the ends of the workpiece and the rotating moment of the workpiece are both reduced as described above. Consequently, it is possible to improve the tilting jig economically.

Moreover, according to the present invention, at least six faces of the jig body are provided with openings, and the jig body is capable of rotating about an axis perpendicular to the central tilt axis. Since the jig body is capable of rotating about the central tilt axis as well as the axis perpendicular thereto, it is possible to arrange all of the six faces provided with openings (front, back, top, bottom, left-side, and right-side faces) face to face with the spindle head. Therefore, it is possible to process all the surfaces of the workpiece by varying the tilt angle of the tilting jig, without removing the workpiece from the jig body. As a result, the time required to process one workpiece is significantly reduced.

Furthermore, since the tilting jig is arranged on the workpiece transferring route which is aligned with the central tilt axis and the entrance and exit of the workpiece are also arranged on the aforementioned central tilt axis, it is possible to process the workpiece on the workpiece transferring route. Accordingly, the excessive movement of the workpiece between the workpiece transferring route and the tilting jig is completely eliminated and therefore there is no need to use any separate workpiece setting device.

As described in the foregoing, according to the present invention, the simplified construction of the tilting jig allows the manufacturing cost thereof to be reduced and the holding angle of the workpiece to be varied efficiently. Consequently, the manufacturing cost of any product having a plurality of surfaces to be processed can be reduced.

It is an object of the present invention to reduce the overall cost of the machining process by simplifying the construction of a tilting jig and varying the angle at which a workpiece is held efficiently, and thereby to avoid the troubles in processing a plurality of surfaces of the workpiece. In order to achieve the above-described object, according to the present invention, there is provided a jig body capable of rotating about a central tilt axis, and a clamp device for clamping the workpiece is provided inside the jig body. The workpiece is held by the clamp device on the central tilt axis, thereby minimizing the turning radius of the ends of the workpiece and the rotating moment of the workpiece during the tilting movement thereof. Thus, the cubic volume and strength required for the tilting jig and the driving power required for the power source can also be reduced, thereby allowing a compact and lightweighted tilting jig to be obtained.

## Claims

1. A tilting jig comprising a workpiece holding portion for holding a workpiece thereon, said workpiece holding portion being arranged on a central tilt axis.

2. A tilting jig according to claim 1, wherein said workpiece holding portion comprises a jig body capable of rotating about said central tilt axis, and a clamp device for clamping the workpiece is provided inside the jig body.

3. A tilting jig according to claim 2, wherein at least six faces of said jig body are provided with openings, and said jig body is capable of rotating about an axis perpendicular to the central tilt axis.

4. A tilting jig according to one of the claims 1 through 3, wherein a workpiece transferring route is arranged on the central tilt axis, and a workpiece feeding entrance and a workpiece removing exit are provided on said central tilt axis.
